# EUROPEAN PATENT SPECIFICATION

(11) **EP 3 213 450 B1**
(45) Date of publication and mention of the grant of the patent: **27.03.2024**
(21) Application number: 15791433.4
(22) Date of filing: 22.10.2015
(51) Int. Cl.: H04L 5/00, H04W 88/06

(54) **RELIABLE TRANSMISSION OF INFORMATION ON CONTROL CHANNELS**
ZUVERLÄSSIGE ÜBERTRAGUNG VON INFORMATIONEN IN STEUERKANÄLEN
TRANSMISSION FIABLE D'INFORMATIONS SUR DES CANAUX DE COMMANDE

(30) Priority: 31.10.2014 US 201462073870 P; 12.06.2015 US 201514738598
(43) Date of publication of application: 06.09.2017
(73) Proprietor: QUALCOMM Incorporated, San Diego, CA 92121-1714 (US)
(72) Inventor: AZARIAN YAZDI, Kambiz, San Diego California 92121-1714 (US); JI, Tingfang, San Diego California 92121-1714 (US); JIANG,Jing, San Diego California 92121-1714 (US); SORIAGA, Joseph Binamira, San Diego California 92121-1714 (US)
(74) Representative: Bardehle Pagenberg Partnerschaft mbB Patentanwälte Rechtsanwälte
(86) International application number: PCT/US2015/056988
(87) International publication number: WO 2016/069379

(56) References cited:
- WO-A1-2011/088612
- WO-A1-2013/016798
- US-A1- 2013 194 931

## Description

### TECHNICAL FIELD

Aspects of the present disclosure relate generally to wireless communication systems, and more particularly, to control channel transmissions in wireless communication systems.

### BACKGROUND

Wireless communication networks are widely deployed to provide various communication services such as telephony, video, data, messaging, broadcasts, and so on. Such networks, which are usually multiple access networks, support communications for multiple users by sharing the available network resources, as for example described in US 2013/0194931 A1 and WO 2013/016798 A1.

Within such wireless networks a variety of data services may be provided, including voice, video, and emails. More recently, wireless communication networks are being utilized for an even broader range of services, including mission critical applications and remote control applications such as tele-surgery, where real-time feedback is necessary. In such applications, very high reliability is needed to reduce or prevent lost packets, and very low latency is critical to enable a suitably high quality of service. That is, the time for information to be transmitted from a communication device, and a response received back at the communication device, may need to be extremely rapid, on the order of milliseconds.

As the demand for mobile broadband access continues to increase, research and development continue to advance wireless communication technologies not only to meet the growing demand for mobile broadband access, but to advance and enhance the user experience.

### BRIEF SUMMARY OF SOME EXAMPLES

The disclosure provides a method of wireless, a corresponding scheduling entity, and a corresponding computer program product in accordance with the appended claims 1, 7, 13, respectively. Further aspects of the disclosure are provided in accordance with the appended dependent claims.

### BRIEF DESCRIPTION OF THE DRAWINGS

FIG. 1 is a block diagram conceptually illustrating an example of a scheduling entity communicating with one or more subordinate entities according to some embodiments.
FIG. 2 is a diagram illustrating an example of a network architecture.
FIG. 3 is a block diagram illustrating an example of a hardware implementation for a scheduling entity employing a processing system according to some embodiments.
FIG. 4 is a block diagram illustrating an example of a hardware implementation for a subordinate entity employing a processing system according to some embodiments.
FIG. 5 is a schematic diagram illustrating an example of a synchronous multiple access channel structure for a downlink transmission including a thin control channel according to some embodiments.
FIG. 6 is a schematic diagram illustrating control channel transmission according to some embodiments.
FIG. 7 is a flow chart illustrating an example of the transmission of control information utilizing multi-link diversity according to some embodiments.
FIG. 8 is a block diagram illustrating an example of the transmission of control information utilizing multi-link diversity according to some embodiments.
FIG. 9 is a flow chart illustrating an example of the transmission of control information utilizing selection diversity according to some embodiments.
FIG. 10 is a block diagram illustrating an example of the transmission of control information utilizing selection diversity according to some embodiments.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

As described further below, various aspects of the present disclosure provide for the wireless transmission of control information in a highly reliable fashion. Control information may include scheduling information or resource assignments for scheduling or assigning time-frequency resources for associated data transmissions, either by the device transmitting the control information, or by one or more devices receiving the control information. Control information may further include modulation and/or coding information, power control information, synchronization or timing information, or other similar information for configuring or characterizing the associated data transmissions. Even further, control information may include feedback from a receiving device, such as channel quality information (CQI), precoding control information (PCI), packet acknowledgments or non-acknowledgments (ACK/NACK), scheduling requests, or other similar information.

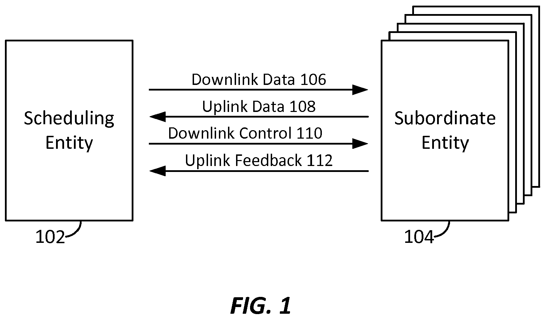

Referring now to FIG. 1, a block diagram illustrates devices engaged in wireless communication utilizing downlink data channels 106, downlink control channels 110, uplink data channels 108, and uplink feedback channels 112, described in further detail below. Of course, the channels illustrated in FIG. 1 are not necessarily all of the channels that may be utilized between devices, and those of ordinary skill in the art will recognize that other channels may be utilized in addition to those illustrated. As illustrated in FIG. 1, a device may be a scheduling entity 102. Broadly, a scheduling entity 102 may be a node or device responsible for scheduling traffic in a wireless communication network, including, e.g., the downlink data 106 from the scheduling entity 102 to one or more subordinate entities 104, and/or the uplink data 108 from one or more subordinate entities 104 to the scheduling entity 102. Further, a device may be a subordinate entity 104. Broadly, the subordinate entity 104 is a node or device that receives and operates in accordance with scheduling control information, including but not limited to scheduling grants, synchronization or timing information, or other control information from another entity in the wireless communication network such as the scheduling entity 102.

As illustrated, the scheduling entity 102 may broadcast the downlink data 106 to one or more subordinate entities 104. In accordance with aspects of the present disclosure, the term downlink may refer to a point-to-multipoint transmission originating at the scheduling entity 102. Another way to describe this arrangement may be to use the term broadcast channel multiplexing. Further, the term uplink as used in the present disclosure may refer to a point-to-point transmission of data or control information, originating at a subordinate entity 104.

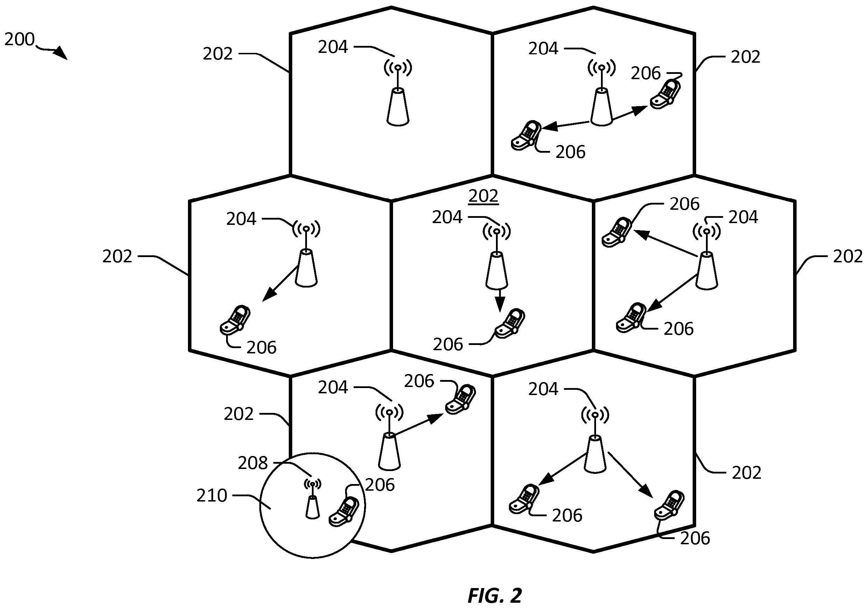

The scheduling entity 102 and the subordinate entity 104 may operate within an access network. FIG. 2 is a diagram illustrating a generalized example of an access network 200. In this example, the access network 200 is divided into a number of cellular regions (cells) 202. One or more lower power class base stations 208 may have a cellular region 210 that overlaps with one or more of the cells 202. The lower power class base station 208 may be a femto cell (e.g., home Node B), pico cell, micro cell, remote radio head, or in some instances, another user equipment (UE) 206. The macro base stations 204 are each assigned to a respective cell 202 and are configured to provide an access point to a core network for all the UEs 206 in the cells 202. There is no centralized controller in this example of an access network 200, but a centralized controller may be used in alternative configurations. The base stations 204 are responsible for all radio related functions including radio bearer control, admission control, mobility control, scheduling, security, and connectivity to the serving gateway 216.

The modulation and multiple access scheme employed by the access network 200 may vary depending on the particular telecommunications standard being deployed. As those skilled in the art will readily appreciate from the detailed description to follow, the various concepts presented herein are well suited for various applications including telecommunication standards employing other modulation and multiple access techniques. By way of example, these concepts may be employed in 5G, LTE, Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The base stations 204 may have multiple antennas supporting multiple-input multiple-output (MIMO) technology. The use of MIMO technology enables the base stations 204 to exploit the spatial domain to support spatial multiplexing, beamforming, and transmit diversity. Spatial multiplexing may be used to transmit different streams of data simultaneously on the same frequency. The data steams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the downlink (DL). The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the base station 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

Certain aspects of an access network described herein may relate to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use any suitable modulation and coding scheme in various aspects of the disclosure.

Referring now to FIGs. 1 and 2, the scheduling entity 102 may correspond to the base stations 204 and 208. In additional examples, the scheduling entity 102 may correspond to the UE 206 or any other suitable node in the wireless communication network 200. Similarly, in various examples, the subordinate entity 104 may correspond to the UE 206, a base station 204/208, or any other suitable node in the wireless communication network 200.

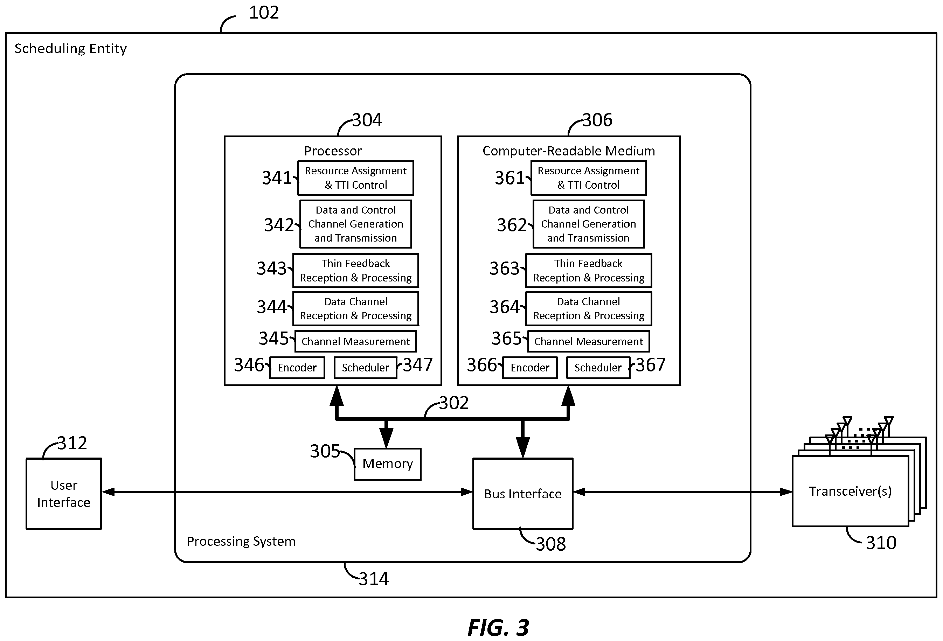

FIG. 3 is a conceptual diagram illustrating additional detail of an example of a hardware implementation for an exemplary scheduling entity 102 employing a processing system 314. In accordance with various aspects of the disclosure, an element, or any portion of an element, or any combination of elements may be implemented with a processing system 314 that includes one or more processors 304.

In various aspects of the disclosure, the scheduling entity 102 may be any suitable radio transceiver apparatus, and in some examples, may be embodied by a base station (BS), a base transceiver station (BTS), a radio base station, a radio transceiver, a transceiver function, a basic service set (BSS), an extended service set (ESS), an access point (AP), a Node B, an eNode B (eNB), a home eNB (HeNB), a mesh node, a relay, a macrocell, microcell, picocell, or femtocell, or some other suitable terminology. A base station may provide a wireless access point to a core network for any number of user equipment (UE) or other communication entities or devices.

In other examples, the scheduling entity 102 may be embodied by a wireless UE. Examples of a UE include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, an entertainment device, a vehicle component, a wearable computing device (e.g., a smart watch, a health or fitness tracker, etc.), an appliance, a sensor, a vending machine, or any other similar functioning device. The UE may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology.

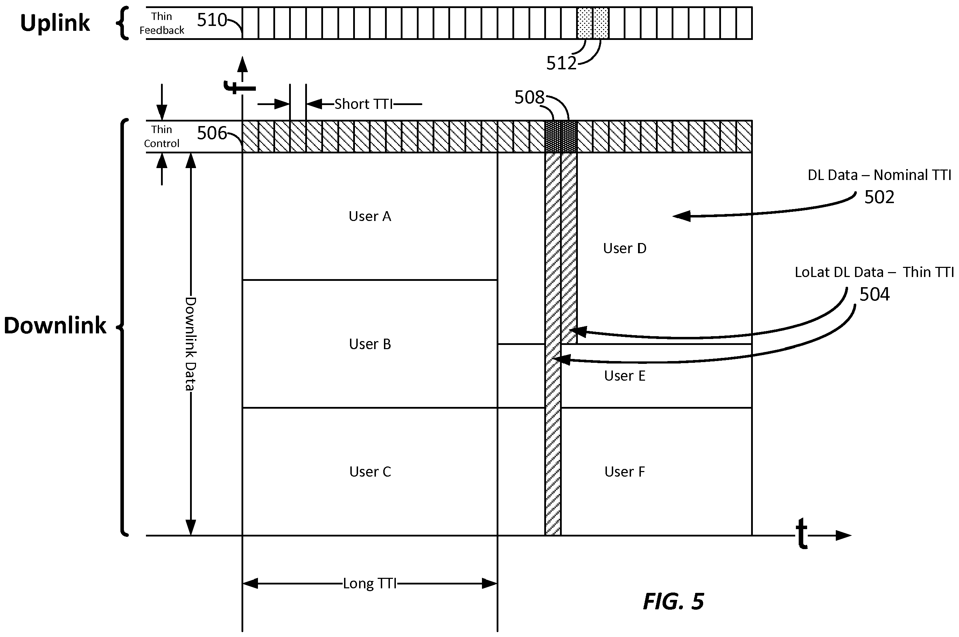

Examples of processors 304 include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. That is, the processor 304, as utilized in a scheduling entity 102, may be used to implement any one or more of the processes described below and illustrated in FIG. 5, 6, 7, and/or 8.

In this example, the processing system 314 may be implemented with a bus architecture, represented generally by the bus 302. The bus 302 may include any number of interconnecting buses and bridges depending on the specific application of the processing system 314 and the overall design constraints. The bus 302 links together various circuits including one or more processors (represented generally by the processor 304), a memory 305, and computer-readable media (represented generally by the computer-readable medium 306). The bus 302 may also link various other circuits such as timing sources, peripherals, voltage regulators, and power management circuits, which are well known in the art, and therefore, will not be described any further. A bus interface 308 provides an interface between the bus 302 and one or more transceiver(s) 310. The transceiver(s) 310 provide a means for communicating with various other apparatus over a transmission medium, e.g., utilizing one or more physical links. That is, one or more transceivers 310 may be configured for wireless communication over one or more physical links. In some examples, a single transceiver 310 may be configured for communication over a plurality of physical links, while in other examples, a plurality of transceivers 310 may each be configured for communication over respective single physical links. Depending upon the nature of the apparatus, a user interface 312 (e.g., keypad, display, speaker, microphone, joystick) may also be provided.

In some aspects of the disclosure, the processor 304 may include resource assignment and transmission time interval (TTI) control circuitry 341, configured to generate, schedule, and modify a resource assignment or grant of time-frequency resources. The resource assignment and TTI control circuitry 341 may further be configured to determine the TTI to utilize for uplink and downlink transmissions, e.g., whether data transmissions should utilize a first, long TTI, or a second, short TTI. The resource assignment and TTI control circuitry 341 may operate in coordination with resource assignment and TTI control software 361. The processor 304 may further include data and control channel generation and transmission circuitry 342, configured to generate and transmit uplink and downlink data and control channels, as well as uplink feedback channels and downlink control channels, including but not limited to a thin control channel, a thin feedback channel, and an assignment channel. The data and control channel generation and transmission circuitry 342 may operate in coordination with data and control channel generation and transmission software 362. The processor 304 may further include thin feedback reception and processing circuitry 343, configured to receive any suitable feedback transmissions from a one or more subordinate entities, including but not limited to HARQ feedback information (e.g., ACK/NACK), channel quality indicator (CQI), etc.

The thin feedback reception and processing circuitry 343 may operate in coordination with thin feedback reception and processing software 363. The processor 304 may further include data channel reception and processing circuitry 344, configured to receive and process user data on uplink data channels from one or more subordinate entities. The data channel reception and processing circuitry 344 may operate in coordination with data channel and reception and processing software 364. The processor 304 may further include channel measurement circuitry 345, configured to determine one or more characteristics or conditions of physical communication links, such as interference, noise propagation delay, attenuation, fading, etc. In some examples, the determined characteristics may include system characteristics of the physical link, such as a maximum transmit power allowed in a given band or on a given channel; while in some examples, the determined channel characteristics may include device characteristics such as an amount of available power headroom for a given physical link. The channel measurement circuitry 345 may operate in coordination with channel measurement software 365. The processor 304 may further include an encoder circuit 346 configured to encode information such as data information and/or control information utilizing any suitable encoding algorithm, such as a convolutional code or turbo code. The encoder circuitry 346 may operate in coordination with encoder software 366. The processor 304 may further include scheduler circuitry 347 configured for allocating encoded information to or among a plurality of physical links. The scheduler circuitry 347 may operate in coordination with scheduler software 367.

The processor 304 is responsible for managing the bus 302 and general processing, including the execution of software stored on the computer-readable medium 306. The software, when executed by the processor 304, causes the processing system 314 to perform the various functions described below for any particular apparatus. The computer-readable medium 306 may also be used for storing data that is manipulated by the processor 304 when executing software.

One or more processors 304 in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium 306. The computer-readable medium 306 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium 306 may reside in the processing system 314, external to the processing system 314, or distributed across multiple entities including the processing system 314. The computer-readable medium 306 may be embodied in a computer program product. By way of example, a computer program product may include a computer-readable medium in packaging materials. Those skilled in the art will recognize how best to implement the described functionality presented throughout this disclosure depending on the particular application and the overall design constraints imposed on the overall system.

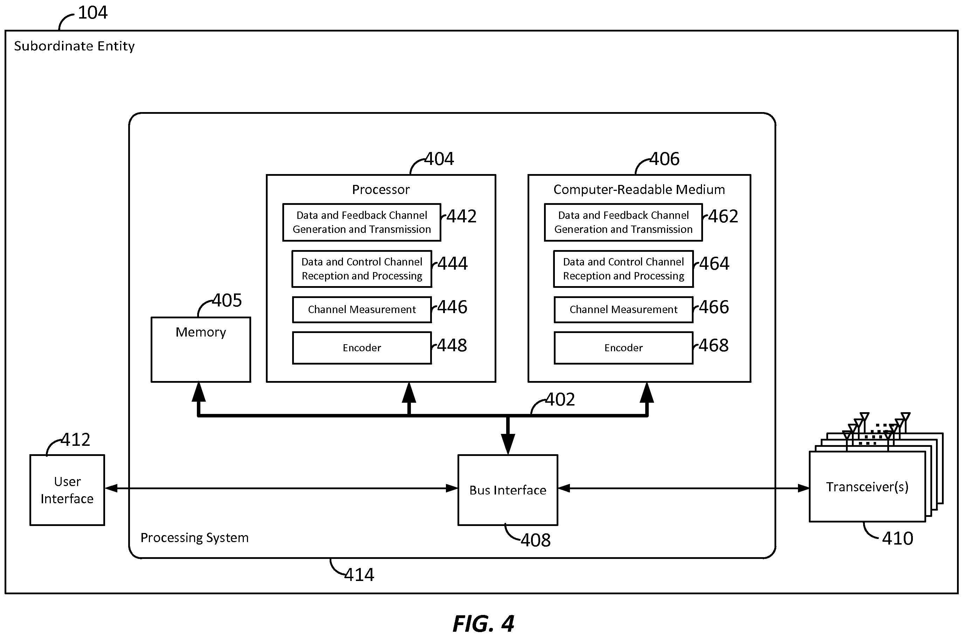

FIG. 4 is a conceptual diagram illustrating additional detail of an example of a hardware implementation for an exemplary subordinate entity 104 employing a processing system 414. In accordance with various aspects of the disclosure, an element, or any portion of an element, or any combination of elements may be implemented with a processing system 414 that includes one or more processors 404.

The processing system 414 may be substantially the same as the processing system 314 illustrated in FIG. 3, including a bus interface 408, a bus 402, memory 405, a processor 404, and a computer-readable medium 406. Furthermore, the subordinate entity 104 may include a user interface 412 and a transceiver 410 substantially similar to those described above in relation to FIG. 3. The processor 404, as utilized in a subordinate entity 104, may be used to implement any one or more of the processes described below and illustrated in FIG. 5, 6, 7, and/or 8.

In some aspects of the disclosure, the processor 404 may include data and feedback channel generation and transmission circuitry 442, configured to generate and transmit uplink data on a data channel, and to generate and transmit uplink feedback on a feedback channel. The data and feedback channel generation and transmission circuitry 442 may operate in coordination with data and feedback channel generation and transmission software 452. The processor 404 may further include data and control channel reception and processing circuitry 444, configured for receiving and processing downlink data on a data channel, and to receive and process control information on one or more downlink control channels. In some examples, received downlink data and/or control information may be temporarily stored in a data buffer within memory 405. The processor 404 may further include channel measurement circuitry 446, configured to determine one or more characteristics or conditions of physical communication links, such as interference, noise propagation delay, attenuation, fading, etc. In some examples, the determined characteristics may include system characteristics of the physical link, such as a maximum transmit power allowed in a given band or on a given channel. In other examples, the determined channel characteristics may include device characteristics such as an amount of available power headroom for a given physical link. The channel measurement circuitry 446 may operate in coordination with channel measurement software 466. The processor 404 may further include an encoder circuit 448 configured to encode information such as data information and/or control information utilizing any suitable encoding algorithm, such as a convolutional code or turbo code. The encoder circuitry 448 may operate in coordination with encoder software 468.

### Latency

The various concepts presented throughout this disclosure may be implemented across a broad variety of telecommunication systems, network architectures, and communication standards. For example, the 3^{rd} Generation Partnership Project (3GPP) is a standards body that defines several wireless communication standards for networks including the evolved packet system (EPS), frequently referred to as long-term evolution (LTE) networks. LTE networks can provide end-to-end latency between a transmitting device and a receiving device on the order of 50ms, with over-the-air latency for a particular packet being in the range of 10ms. Currently known LTE functionality provides for a round trip time (RTT) for certain feedback signaling (i.e., hybrid automatic repeat request (HARQ) signaling) of at least about 8ms, using a transmission time interval (TTI) of 1ms. Here, a TTI may correspond to a minimum duration for a unit of information that can independently be decoded.

Next generation networks going forward, such as a fifth-generation (5G) network, may provide for many different types of services or applications, including but not limited to web browsing, video streaming, VoIP, mission critical applications, multi-hop networks, remote operations with real-time feedback (e.g., tele-surgery), etc.

In particular, applications that use mission-critical (MiCri) communication, which may include high reliability low latency (HRLL) communication and high reliability moderate latency (HRML) communication, are those that demand a very low error rate and very low RTT, particularly for the associated control information. Such MiCri communication may most frequently be applied for feedback transmissions, such as those used in hybrid automatic repeat request (HARQ) signaling. For example, an application may be a HRLL/MiCri application if it requires an error rate of 1×10⁻⁴ or less, and/or a HARQ RTT of 100 µs or less. This compares to the performance of most existing state-of-the art communication systems, which can generally only support a single TTI at any given time, which is much longer than these requirements. For example, frequency division duplex (FDD) LTE networks support a TTI of 1 ms, which is not adequate for providing such low HARQ RTTs.

To support the needs of such HRLL/MiCri applications, according to various aspects of the present disclosure, some wireless communication systems may implement a short or thin TTI (described in further detail below), which may have a duration on the order of 25 µs. Further, such a wireless communication system may support a longer, nominal TTI, which may have a duration on the order of 225 µs (providing a ratio of 9:1). Of course, these particular values for TTI durations, and the ratio between the two, are merely provided as one nonlimiting example to illustrate certain concepts, and those of ordinary skill in the art will comprehend that any suitable value may be utilized for short (thin) and long (nominal) TTIs. Here, HRLL/MiCri communication utilizing the thin TTI may puncture (or, in some examples, overlap or be superposed upon) other communication utilizing the nominal TTI.

In a further aspect of the disclosure, a wireless communication system may achieve efficient multiplexing of thin and nominal TTIs, e.g., utilizing the aforesaid puncturing and/or superposition, by means of certain thin control channels. That is, the scheduling entity 102 may broadcast downlink control information 110 including a thin control channel to one or more subordinate entities 104. As described herein below, the use of a thin control channel can enable modification/puncturing of uplink and/or downlink data being transmitted using a first, long transmission time interval (TTI), with other data (e.g., low latency (LoLat) packets) utilizing a second, short TTI. Here, a TTI may correspond to an encapsulated set or packet of information capable of being independently decoded by a receiving device. In various examples, TTIs may correspond to frames, sub-frames, data blocks, time slots, or other suitable groupings of bits for transmission.

In the description that follows, for ease of discussion it is assumed that the multiplexed data includes latency-tolerant data using a long TTI, and low-latency (LoLat) data using a short TTI. However, this is merely one example of the multiplexing of different types or categories of data that may be enabled utilizing the thin control channels disclosed herein. That is, those of ordinary skill in the art will comprehend that the thin control channels disclosed herein may be utilized for many rapid and relatively large or small modifications to downlink data. Moreover, any suitable number, of two or more than two TTIs, may be utilized within the scope of the present disclosure; however, for ease of description, the examples detailed below include two TTIs.

Furthermore, the uplink feedback information 112 may include a thin feedback channel transmitted from a subordinate entity 104 to the scheduling entity 102. The thin feedback channel may in some examples include a request for the scheduling entity 102 to modify/puncture a first, long TTI with LoLat packets utilizing a second, short TTI. Here, in response to the request transmitted on the thin feedback channel, the scheduling entity 102 may transmit, in the thin control channel, information that may schedule modification/puncturing of the long, first TTI with LoLat packets utilizing the second, short TTI. In a further example, the thin feedback channel may include information about interference experienced at the subordinate entity 104, which the scheduling entity 102 may utilize dynamically to modify downlink transmissions in a way that may make further downlink transmissions more robust to the interference.

### Thin Control Channels

As described below, some aspects of the disclosure provide for downlink-downlink multiplexing, wherein a scheduling entity 102 may be enabled to multiplex low-latency downlink data alongside the ongoing transmission of high-latency downlink data. Of course, this example is merely provided to illustrate certain concepts relating to the transmission of control information. As one simple example, rather than HRLL/MiCri data using the short or thin TTI, HARQ retransmissions may be sent in this scheme. Those of ordinary skill in the art will comprehend that these are merely exemplary in nature, and other examples may fall within the scope of the disclosure and the appended claims.

FIG. 5 is a schematic illustration of an example of a synchronous multiple access channel structure including a thin control channel as it may be implemented according to some aspects of the present disclosure. In this illustration, the channel structure may be applicable to a downlink data transmission in a frequency division duplex (FDD) channel, i.e., a transmission from a scheduling entity to one or more subordinate entities. Of course, this channel structure is not limited to such an arrangement, but rather may be generalized to be applicable to any link where the transmitting device is scheduling the traffic. For example, transmissions may utilize a time division duplex (TDD) channel, and/or transmissions may be in the reverse (UL/DL) direction other than that described below.

In the illustration, the horizontal axis (t) represents time, while the vertical axis (f) represents frequency (not to scale). Channel time-frequency resources for various users of the air interface occupy given areas within the channel, as identified in the different blocks. For example, some of the time-frequency resources may be occupied by "regular" downlink data 502 utilizing a nominal, relatively long TTI. Any suitable control channel may be utilized to grant resources to the various users in the network, such that those subordinate entities 104 may receive downlink data according to their respective assignments. Here, the regular DL data 502 may have less stringent latency requirements. In the illustration, as one example, six users labeled User A, B, C, D, E, and F are each scheduled time-frequency resources for regular DL data 502 as indicated by their respectfully labeled blocks. Of course, in various examples any number of users may be scheduled the use of resources. Further, while in the illustration all of the time-frequency resources are shown being assigned to regular users, in various examples some or even all of the time-frequency resources may be unassigned, or assigned for another purpose other than for regular user data.

In the context of the present disclosure, a user receiving regular DL data 502 may be a subordinate entity 104 that receives a resource assignment from a scheduling entity 102. Here, the resource assignment indicates for the subordinate entity 104 to utilize a long/nominal transmission time interval (TTI). Such regular DL data 502 may be more tolerant to longer latency in their communication, and may in some examples be more optimized for capacity. Accordingly, these data may utilize such longer TTIs for packets that can tolerate more latency than other data or other types of communication that might require low latency (LoLat) communication. A nominal TTI may broadly be any TTI that is longer than a short or LoLat TTI, described in further detail below. In some examples, a nominal TTI may be a TTI that has a duration of a plurality of data symbols, or time slots. Some non-limiting examples of a nominal TTI may have a duration of 100 µs, 240 µs, or 1 ms. Of course, any suitable duration for a nominal TTI may be utilized within the scope of the present disclosure.

Furthermore, as illustrated in FIG. 5, in addition to the downlink traffic channels used for the regular DL data 502, a thin control channel 506 may be utilized as illustrated. Here, the terminology "thin" in reference to the control channel 506 may refer to a short or thin duration in time over which units of information may be transmitted over the channel. The thin control channel 506 may be included in the DL control information 110 described above and illustrated in FIG. 1. Within the present disclosure, the thin control channel 506 may lie in one or more frequency sub-band(s) outside of (e.g., above or below) the frequency sub-bands utilized by the traffic transmissions, such as the allocated time-frequency resources described above for regular users A-F. In some examples, the width of the thin control channel 506 in the frequency direction may be reduced or minimized so as to reduce or minimize the amount of overhead utilized by the thin control channel 506.

In a further aspect, all active users (e.g., subordinate entities 104 including but not necessarily limited to the users receiving regular DL data 502) in communication with the scheduling entity 102 that broadcasts the thin control channel 506 may monitor (and, in some examples, buffer) the thin control channel 506 shown herein. For example, as illustrated in FIG. 5, each time slot, symbol, or unit of the thin control channel 506 may correspond to the duration of a short or thin TTI. That is, in some examples, the thin TTI may correspond to the time duration of a single symbol. Some non-limiting examples of a thin TTI may have a duration of 10µs, 20µs, 100µs, or any other suitable duration that is shorter than the nominal TTI. In some examples, the nominal TTI may represent an integer multiple of thin TTIs. In some examples, a common symbol duration may be utilized within both the nominal TTI and the thin TTI, or in other examples, different symbol durations may be utilized within the nominal TTI and the thin TTI.

The thin control channel 506 may carry any suitable control information for the subordinate entities 104, such as the users receiving the regular DL data 502, including but not limited to scheduling or grants of time-frequency resources to utilize for uplink and/or downlink transmissions. In particular, as described in further detail below, the thin control channel 506 may enable a fast re-allocation of already-scheduled time-frequency resources to subordinate entities that may wish to communicate in a low-latency manner. That is, the thin control channel 506 may be utilized in some examples to modify in-flight data (e.g., to modify an existing assignment of downlink resources to the users receiving the regular DL data 502).

That is, at any time, one or more subordinate entities 104 in communication with the scheduling entity 102 may come to need low-latency (LoLat) communication, wherein more stringent latency requirements exist than the relatively long latency resulting from the communication by users receiving the regular DL data 502 utilizing the nominal TTI. Thus, in an aspect of the present disclosure, the thin control channel 506 may enable dynamic multiplexing of the traffic for one or more subordinate entities 104 that desire low latency communication, who can utilize a short TTI for LoLat DL data 504, and the traffic for the regular DL data 502, who utilize the long TTI.

Still referring to FIG. 5, an example is illustrated to show an exemplary scheme for a re-allocation of time-frequency resources from users receiving regular DL data 502 to one or more users for receiving LoLat DL data 504. That is, a plurality of users A-F may be receiving regular DL data 502 utilizing an existing assignment of time-frequency resources, as described above. Here, all active subordinate entities 104 with in-flight data corresponding to their existing assignments may be configured to monitor the thin control channel 506, with the possible exception of any subordinate entities that have insufficient processing capabilities to do so. By monitoring the thin control channel 506, existing assignments of resources may be modified in accordance with control information on the thin control channel 506, such that ongoing traffic for users receiving regular DL data 502 may be overridden, or replaced with LoLat DL data 504 for one or more users.

That is, in an aspect of the disclosure, within a thin TTI, which overlaps a portion of one or more nominal TTIs, the scheduling entity 102 may transmit LoLat DL data 504 designated for one or more user(s) (e.g., subordinate entities 104). In some examples, to accommodate the LoLat DL data 504, the scheduling entity 102 may puncture the nominal DL data transmission (e.g., cease transmission of the regular DL data 502) for the duration of one or more thin TTIs. Here, when the regular DL 502 data is punctured, it may be the case that some of the regular DL data is simply lost. In this example, forward error correction coding may be utilized to recover the user data in view of the lost symbols due to the puncturing. In another example, the scheduling entity 102 may implement rate matching to account for the puncturing of the regular DL data. That is, the scheduling entity 102 may modify a portion of the regular data utilizing a rate matching algorithm to account for the lost resources. Those of ordinary skill in the art will already know details of a rate matching procedure, so the implementation details thereof are not provided herein. However, in essence, a rate matching algorithm configures an encoding algorithm for the data (e.g., the regular user data) to fit into allocated physical resources. Thus, when the puncturing described above removes a portion of these resources, a rate matching algorithm may actively adjust the encoding (e.g., by adjusting a coding rate) to account for the reduced amount of resources.

In another aspect of the disclosure, rather than puncturing the time-frequency resources for the regular DL data 502, the regular DL data 502 and the LoLat DL data 504 may be superposed, or may overlap. That is, both downlink transmissions may occupy the same time-frequency resources. Here, the receiving devices may be configured to account for the interference that may occur, or in other examples, such interference may result in what may be considered acceptable data losses. In a further example, modification of the regular DL data transmission may be made to account for the overlapped transmissions, e.g., by adjusting the rate matching algorithm as described above.

Accordingly, already-allocated time-frequency resources may dynamically be re-allocated in real time from one user to another, as enabled by virtue of the thin control channel 506.

As illustrated in FIG. 5, at the same time as the LoLat DL data 504 is transmitted, control information corresponding to the LoLat DL data 504 may be carried on the thin control channel 506. For example, control information 508, transmitted on the thin control channel 506 during the thin TTI(s) when the LoLat DL data 504 is transmitted, may include a grant modification that informs the users that resources during that short TTI are being taken away and reassigned to another user. In this way, the users receiving the regular DL data 502 can know that, while they were originally expecting data on that resource, instead, the information on that resource is essentially random data or noise for that user.

The control information 508 carried in the thin TTI may be structured in any suitable manner. As one example, the control information 508 may include an indication that a particular time-frequency resource, or a particular range of time-frequency resources, are being punctured or taken away from the user(s) scheduled to receive regular DL data 502. As illustrated in FIG. 5, the range in the frequency dimension of the puncturing may be the entirety of the used frequency channels or sub-bands allocated for DL data, or in another example, the frequency range of the puncturing may be a portion of the frequency channels or sub-bands allocated for downlink data.

In another example, the control information 508 may include information identifying a user for which its previously allocated time-frequency resource is being punctured. In still another example, the control information 508 may include information identifying which TTI or TTIs in which a resource modification is occurring. For example, the control information 508 need not necessarily occur within the same thin TTI as the resource modification indicated in the control information 508.

In still another example, the control information 508 may include information about an adjustment to a rate matching algorithm that may be utilized on any remaining regular DL data 502 that may be affected by its interruption by the LoLat DL data 504.

That is, in the illustrated example, as described above, this control information 508 is transmitted during the same TTI as the information directed to the user receiving LoLat DL 504. However, this is not the only example within the scope of the present disclosure. In other examples, the control information 508 may be carried during any suitable short TTI, before or even after the modified resource.

In a further aspect, the control information 508 may include information about the grant of time-frequency resources for the user(s) to receive the LoLat DL data 504. In various examples, this may be the same information as used to inform the users receiving the regular DL data 502 about their resource modification. In other examples, this may be separate information tailored for the user(s) to receive the LoLat DL data 504. The control information 508 may further include information identifying the user for whom the LoLat DL data 504 is directed, information to assist the user in receiving the included LoLat DL data 504 (e.g., identification of the particular time-frequency resource allocated, modulation and coding scheme, etc.), or any other suitable information directed to the user(s) to receive the LoLat DL data 504.

For the users to receive the LoLat DL data 504, the thin TTI may be used, as illustrated by the relatively shorter width, in the time dimension, of the time-frequency resources occupied by the LoLat DL data 504. That is, some users, or some types of communication may benefit from, or even require, lower latency than might be available from the usage of the nominal TTI. Accordingly, by utilizing a thin TTI, lower latency may be achieved. The duration of information symbols carried within either of the nominal or thin TTIs may also take any suitable duration, with some examples being a 10µs duration or a 25µs duration for each symbol. In an example wherein orthogonal frequency division multiplexing is adopted, an additional 1µs cyclic prefix may be added to the symbol duration.

In various aspects of the disclosure, the information on the thin control channel 506 may include other information beyond the control information 508 for re-allocating time-frequency resources, as described above. For example, the thin control channel 506 may in some examples carry grant information indicating what time-frequency resources are granted to user(s) to receive regular DL data 502. Of course, another channel or channels may be utilized for the grant of nominal TTI downlink resources. That is, in some examples, a separate grant channel (not illustrated) may be utilized to assign resources for the regular DL data 502.

By utilizing this scheme, the users receiving regular DL data 502 may generally utilize the long TTI, and may further utilize a suitable processing timeline. The processing timeline may be somewhat on the longer side, as extremely fast turnaround might not be needed for the users receiving regular DL 502. On the other hand, users receiving LoLat DL data 504 may generally utilize the short TTI, and may further utilize a fast-turnaround processing timeline.

In the uplink direction, one or more channels may be transmitted from a subordinate entity 104 to the scheduling entity 102. As one example, a thin feedback channel 510 may be configured to carry feedback information from the subordinate entity 104 to the scheduling entity 102. Illustrated in FIG. 5 is the thin feedback channel 510 being utilized to carry HARQ ACK or super-ACK information 512 transmitted by a user that received LoLat DL data 504. That is, when a user receives and decodes the LoLat DL data 504, that user may transmit HARQ feedback 512 on the thin feedback channel 510 a suitable time after receiving the LoLat DL data 504. Of course, this is merely one example, and any suitable information may be carried on the thin feedback channel 510 in various aspects of the present invention.

### Reliability of Thin Control Channels

In order for a network to reach a high reliability level on the data channel, e.g., having an error rate on the order of 1×10⁻⁴, the thin control channel 506 and/or feedback channel 510 should also be very reliable. That is, if a user were to miss an override grant on the thin control channel 506, then the user would not know that the base station or scheduling entity 102 is sending the LoLat DL data 504. Further, if a scheduling entity 102 fails to receive/decode a HARQ ACK on the thin feedback channel 510, then the corresponding data packet may be considered to have failed, and may be unnecessarily retransmitted.

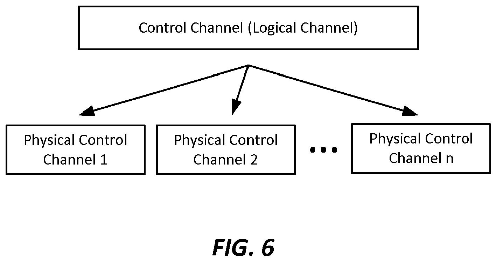

Accordingly, various aspects of the disclosure provide algorithms and arrangements for achieving a high reliability on the thin control channels, including the thin feedback channel 510 and the thin grant channel 506. Broadly, with reference now to FIG. 6, in an abstract sense, a control channel may be regarded as a logical channel. According to an aspect of the present disclosure, this logical channel may be transmitted utilizing one or more of a plurality of physical links, channels, or entities (PHY layers).

Here, in one example the different physical links or channels may be generated utilizing different radios configured for different radio access technologies (RATs). That is, with reference to FIG. 3, a scheduling entity 102 may include a plurality of radios or transceivers 310, each configured for communication with a different RAT. Similarly, with reference to FIG. 4, a subordinate entity 104 may include a plurality of radios or transceivers 410, each configured for communication with a different RAT. Of course, variations on this example may include mere transmitters and/or receivers rather than the transceivers 310/410. Further, one or more of the transmitters, receivers, and/or transceivers 310/410 may be configured with a capability to communicate over two or more RATs, and may accordingly utilize a selected RAT as needed.

In another example, the different physical channels may be generated as part of the same RAT, but may operate utilizing different bands, channel access methods, or transmission schemes. For example, the physical links or channels may include two or more of a sub-2-GHz link, sub-6-GHz link, an above-6-GHz link, a mmW link, etc. Generation of different physical channels utilizing different channel access methods may include any suitable channel access methods, including but not limited to code division multiple access (CDMA), time division multiple access (TDMA), orthogonal frequency division multiple access (OFDMA), non-orthogonal multiple access (NOMA), etc. Generation of different physical channels utilizing different transmission schemes may include the use of a plurality of MIMO configurations, such as a MIMO configuration, a multi-user MIMO configuration, a massive MIMO configuration, and/or a non-MIMO (e.g., single antenna or multi-antenna beamforming) configuration.

In some examples utilizing a plurality of physical links or channels, multi-link diversity may be utilized, as described in further detail below. For example, in the communication between a scheduling entity 102 and a subordinate entity 104, multiple physical links or channels may be used, and the control information may be suitably divided or distributed among those two or more physical channels. In this way, these links may be used together to increase the reliability of the control channels.

In another example, unicast and/or multicast instructions may be sent to a specific subordinate entity 104, or to a group of subordinate entities, identifying a link that may be more favorable for that entity or entities, as described in further detail below. That is, each subordinate entity 104 may have a different favorable link, in terms of link quality or other related considerations.

### Control Channel Multi-Link Diversity

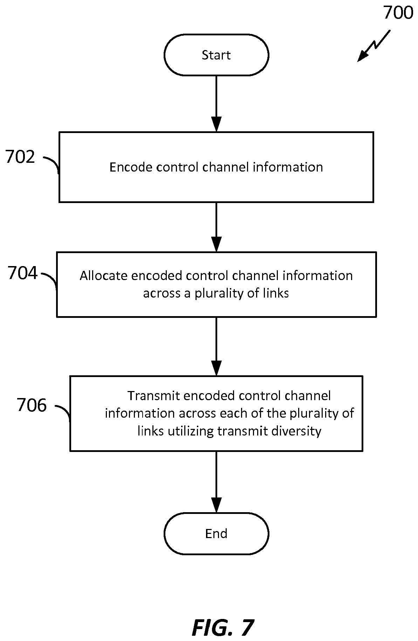

As indicated above, according to some aspects of the disclosure, and as illustrated in the flow chart on FIG. 7, control information may be jointly coded across multiple links. This jointly coded information may be simultaneously (or at nearly the same time) transmitted across the respective physical links or channels, under a multi-link diversity arrangement.

That is, FIG. 7 is a flow chart illustrating an exemplary process 700 for high-reliability transmission of control information utilizing multi-link diversity in accordance with some aspects of the present disclosure. In some examples, the process 700 may be implemented by the scheduling entity 102 and/or at the subordinate entity 104 described above in conjunction with FIGs. 1, 3 and/or 4. In other examples within the scope of the present disclosure, the process 700 may be operational by a general purpose processor, a processing system 314/414 as described above and illustrated in FIGs 3 and/or 4, or any other suitable means for carrying out the described functions.

For the process 700, it may be assumed that a transmitting device (for the sake of example, the transmitting device will be assumed to be the scheduling entity 102) has a set of bits that it wishes to transmit. Here, at least a portion of this set of bits may be control information for transmission on a control channel. This set of bits may be any suitable length, and the control information may include one or more types of control information, including but not limited to scheduling information, LoLat override information, and/or feedback information as described above. For example, at block 702, an encoder 346 at the scheduling entity 102 may encode those bits of control information utilizing any suitable encoding algorithm known to those of ordinary skill in the art, such as a convolutional code or turbo code. Here, the encoding of the control information may include jointly encoding the control information, to be distributed across a plurality of physical links, as described below. That is, rather than encoding each link's transmissions separately, a single encoding entity or encoder may encode the information for transmission on each of the plurality of physical links.

At block 704, the scheduling entity 102 may allocate a portion of the encoded control information to each of a plurality of physical links. That is, after encoding the control information, the encoded control information may be divided, distributed, or split among the various physical links. In some examples, equal portions of the encoded control information may be allocated to each of the physical links, while in other examples, non-equal portions may be allocated to some or all of the physical links. By allocating the information to the links, in various examples, the allocated information may be loaded into a queue or buffer for each of the physical links, or may simply be identified and sequestered within memory for respective links to utilize.

At block 706, the scheduling entity 102 may transmit the encoded information on each of the plurality of physical links in accordance with the allocation in block 704. Here, the transmission on the respective physical link may be performed at the same time, or at different times as suitable in a particular implementation.

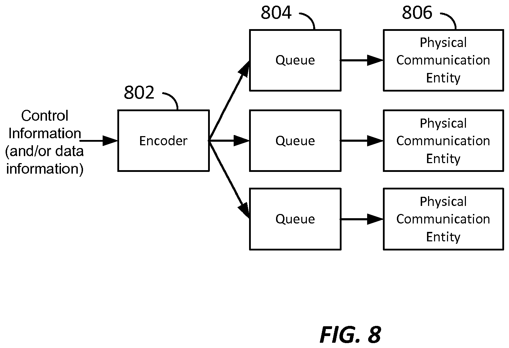

FIG. 8 is a block diagram illustrating jointly encoding control information across a plurality of physical links, allocating a portion of the encoded control information to the plurality of physical links, and transmitting the encoded control information as described above in accordance with one example. In the illustrated example, control information is provided as an input to an encoder 802. Here, the encoder 802 may be the encoder 346 within a scheduling entity 102, as illustrated in FIG. 3. In another example, the encoder 802 may be the encoder 448 within a subordinate entity 104, as illustrated in FIG. 4. In other examples, the encoder 802 may be any suitable encoding device configured for encoding the control information. In accordance with aspects of the disclosure, the encoder 802 may encode the control information utilizing any suitable encoding algorithm, including but not limited to turbo coding, convolutional coding, etc. In some examples, the jointly encoding may take into account the number of queues 804 to which the encoded control information is to be allocated. For example, portions of the encoded control information may be configured to be individually decodable, or the entire set of control information may be configured to be decodable if, for example, all but one of the links are properly received. However, in other examples, the jointly encoding may be independent of the number of queues 804 or links to which the encoded control information is to be allocated.

Upon encoding, the encoded control information may be allocated among a plurality of queues 804, each queue 804 corresponding to a respective physical communication entity 806. That is, a portion of the encoded control information may be allocated to each of the plurality of queues 804, for transmission on respective physical links by each of the respective physical communication entities 806. In some examples, a scheduler 347 (see FIG. 3) or other suitable operational entity (e.g., the processor 304) may control and determine the allocation of the jointly encoded control information. In various examples, as described above, the selection of the particular queues 804 or links to be allocated respective portions of the jointly encoded control information may be in accordance with a variety of factors, parameters, channel characteristics, etc. Furthermore, the amount of jointly encoded control information (e.g., the size and/or number of packets) to be allocated to respective queues 804 or links may additionally take into account these factors, parameters, channel characteristics, etc., in an effort to improve or optimize the transmission of the control information.

The physical communication entities 806 taking the information from their respective queues 804 may in some examples correspond to different transceivers or radios, as described above. In other examples, these physical communication entities 806 may correspond to functional entities within a transmitter, configured for transmission of the respective portions of the encoded control information utilizing different physical channels, e.g., in different bands.

In various aspects of the disclosure, referring once again to FIG. 7, the encoding at block 702 may be configured such that even if one of the physical links is lost or becomes disconnected, the entire set of control information may still be decoded from the information received on the remaining link or links. That is, a suitable error correction algorithm may be utilized, as will be well-known to those of ordinary skill in the art, with sufficient redundancy to fully decode the control information from less than all of the physical links (and in some examples, from any one of the plurality of physical links).

In this way, because the control information may be sent on both (or all) of the physical links, then even if one (or more) of the channels goes into a deep fade or otherwise suffers from degradation, the control information may still be fully recovered by way of the portion transmitted on the other physical link or links. Accordingly, high reliability may be achieved for control information by jointly encoding across multiple links or channels and transmitting utilizing multi-link diversity.

In a further aspect of the disclosure, data information, which may or may not be associated with the control information, may in some examples additionally be transmitted on one or more of the physical links. Here, with reference once again to FIG. 8, it may be the case that the encoder 802 is configured to encode the data information, and the encoded data information may be distributed across the queues 804 for transmission by the physical communication entities 806 over the respective physical links. However, this is not the only example. That is, in other examples, the data information may be separately encoded, and may in some examples be transmitted over a subset, or even a different set of physical links than those utilized for transmission of the control information.

### Control Channel Selection Diversity

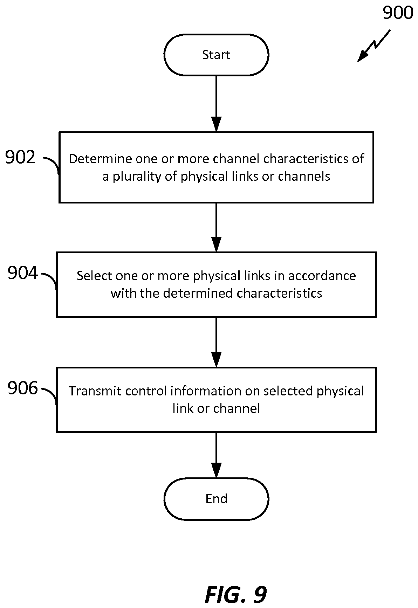

According to a further aspect of the disclosure, as indicated above and as illustrated in the flow chart on FIG. 9, control information may be transmitted utilizing a selected one (or more) physical links or channels to improve their reliability.

That is, FIG. 9 is a flow chart illustrating an exemplary process 900 for high-reliability transmission of control information utilizing selection diversity in accordance with some aspects of the present disclosure. In some examples, the process 900 may be operational by the scheduling entity 102 and/or at the subordinate entity 104 described above in conjunction with FIGs. 1, 3 and/or 4. In other examples within the scope of the present disclosure, the process 900 may be operational by a general purpose processor, a processing system 314/414 as described above and illustrated in FIGs 3 and/or 4, or any other suitable means for carrying out the described functions.

As one example, a transmitting device may be assumed to be the scheduling entity 102. At block 902, the scheduling entity 102 may determine one or more characteristics of each of a plurality of physical links or channels. In various examples, the determined characteristics may be channel conditions such as interference, noise, propagation delay, attenuation, fading, or other channel conditions of the physical link. In other examples, the determined characteristics may be system characteristics of the physical link such as a maximum transmit power allowed (e.g., by a regulatory body) in a given band or on a given channel. In another example, the determined characteristics may be an amount of traffic or loading on a given channel. In another example, the determined characteristics may be device characteristics such as an amount of available power headroom for a given physical link or other capabilities of radio(s) or transceiver(s) configured to transmit utilizing the physical links.

In some examples, the scheduling entity 102 (or broadly, the transmitting device) itself may determine the channel characteristics of the physical links utilizing suitable channel measurement circuitry. In other examples, the scheduling entity 102 (or broadly, the transmitting device) may receive an indication of the channel characteristics of the physical links, provided from one or more subordinate entities 104 (or broadly, receiving devices), or some other node in the network having a capability to determine the channel characteristics. Of course, in further examples, some combination of the two may be utilized in a particular implementation.

At block 904, the scheduling entity 102 may select one or more physical links from among the plurality of physical links, in accordance with the characteristics determined at block 902. For example, the link with the most favorable characteristics (e.g., the least noise and/or interference, the least fading, the highest available power, etc.) may be selected. In some examples, any suitable subset of one or more of the physical links may be selected. That is, it may be the case that one or more particular one(s) of the physical links may have unfavorable characteristics, and may be excluded, and one or more other physical links may be selected (e.g., in a multi-link diversity configuration if a plurality of physical links are utilized) for transmission of the control information. With reference to some of the examples given above in relation to block 902, channel conditions may dictate the selection of a particular physical link. For example, if one physical link has higher interference, higher noise, greater propagation delay, greater attenuation, and/or greater channel fading, then that physical link may not be chosen. In another example, if one physical link has a very low maximum allowed transmit power in a desired band or channel, then that physical link may not be chosen. In another example, if one physical link has a higher amount of traffic or loading on a desired channel, then that physical link may not be chosen. In another example, if one physical link has a lower available power headroom, that physical link may not be chosen. Of course, any suitable combination of the above or other characteristics may be utilized within the scope of the present disclosure.

At block 906, the scheduling entity 102 may transmit the control information on the selected one or more physical links.

By utilizing the above-described algorithm for selection diversity in the transmission of the control information, improved reliability may be achieved. That is, the selection of one or more physical links at block 904 may be made in accordance with a determination that the selected link(s) are likely to provide more reliable conveyance of the control information than would the un-selected link(s).

In a further aspect of the disclosure, the selection of a channel may be device-specific. That is, if multiple physical links exist between a scheduling entity 102 and different subordinate entities 104, the scheduling entity 102 may determine whether a specific subordinate entity 104 is favoring one link over the other(s). This may occur based on the channel conditions that that particular subordinate entity 104 is currently experiencing. For example, one physical link may be in a deep fade, while the other physical link(s) may be experiencing favorable channel conditions. Thus, selection diversity may be utilized to select a better link, and accordingly send the control information for that UE over the selected, favorable link.

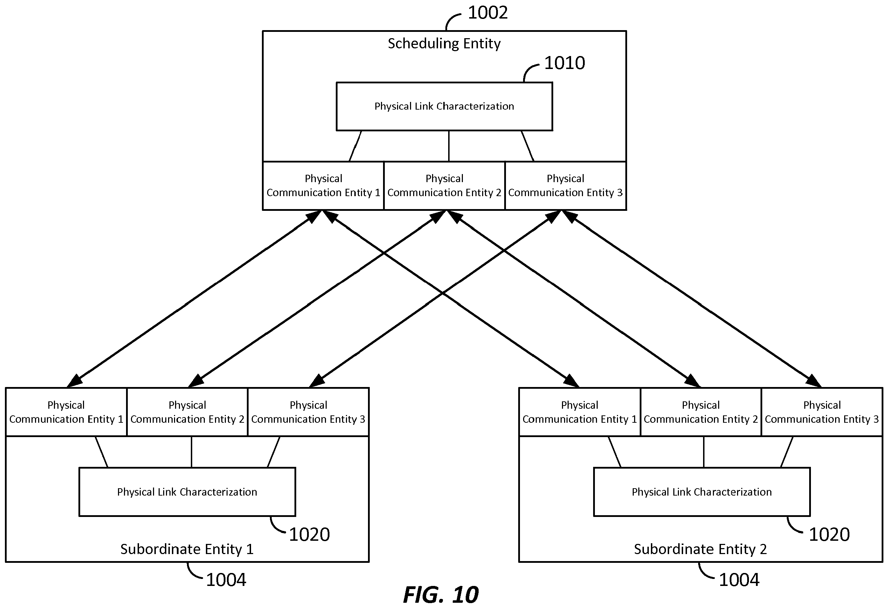

As one example, referring to FIG. 10, a scheduling entity 1002 may include a physical link characterization unit 1010, which may be utilized in coordination with a plurality of physical communication entities to characterize the physical communication links from the perspective of the scheduling entity 1002. Here, the scheduling entity 1002 may select one or more of the physical links in accordance with the characterization by the physical link characterization unit 1010.

However, in another example, subordinate entities 1004 may include physical link characterization units 1020. Here, the physical link characterization unit 1020 may be utilized in coordination with a plurality of physical communication entities to characterize the physical communication links from the perspective of the subordinate entity 1004. As can be seen in FIG. 10, the physical links for each subordinate entity 1004 may be different from those for any other subordinate entity. Thus, the selection of one physical communication link for one subordinate entity might not be the best selection for another subordinate entity. Accordingly, a first physical link may be selected for a first subordinate entity, while a second physical link may be selected for a second subordinate entity. In some examples, each subordinate entity 1004 may be configured to transmit an indication to the scheduling entity corresponding to that subordinate entity's selected physical link.

In a further aspect of the disclosure, a scheduling entity 1002 (which may be the same as the scheduling entity 102 described above) may be limited by the maximum transmit power per band, or per physical link. However, in the case that the scheduling entity 1002 is a macrocell base station, its overall transmit power across all bands or physical links is generally not limited. Thus, jointly encoding control information across each of the physical links and transmitting the control information using multi-link diversity may be a good option for highly reliable downlink transmissions of control information from the scheduling entity 1002 to subordinate entities 1004.

On the side of the subordinate entity 1004, however, as a whole this device may generally have a total limit on transmit power. For example, a user equipment (UE) acting as the subordinate entity 1004 may have a particular total uplink transmit power limit. If it is transmitting over three physical links, this power limit would be suitably divided among those three physical links. For this reason, selection diversity may be a good option for highly reliable uplink transmissions of control information from the subordinate entity 1004 to the scheduling entity 1002. That is, for the subordinate entity 1004, instead of jointly encoding across the multiple physical links and having to split its transmit power across these links, it may rather decide which link is better, select that link, and use all its transmit power to send the control information over the selected link.

Control messages for LoLat DL data 504 may generally be monitored by all subordinate entities 104 in the cell. For example, when the scheduling entity 102 sends control information including a scheduling grant, all users in the cell should generally monitor the channel on which that grant is transmitted. Based upon the grant, the users should accordingly take a suitable action. For example, if the scheduling grant corresponds to a mission critical (LoLat) transmission, then by monitoring that channel, the addressed subordinate entity 104 may know that a downlink transmission is directed to it. Moreover, other subordinate entities 104 besides the one receiving the LoLat DL data 504 may refrain from transmitting, or take other suitable action to help ensure the addressed subordinate entity 104 receives the LoLat DL data 504. Thus, for messages that may need to be monitored by all users, broadcasting those messages is a suitable course of action, with the message jointly encoded across multiple links. However, if a message is specific to a subordinate entity 104, or to a group of subordinate entities 104 (e.g., if a subordinate entity wants to send a super ACK to let a scheduling entity 102 know that a packet was received, and some complementary information relating to interference), selection diversity may be a better match.

In some aspects of the disclosure, while a selected one (or subset) of the physical links may be utilized for transmission of the control information, this selection may not necessarily correspond to transmission of the data information. That is, to improve the reliability of the control information, in some examples, the best link(s) may be selected for transmission of the control information, as described above. However, to improve throughput, data information may continue to be transmitted across all of the physical links, even if one or more of those links might be less reliable than other links. In this example, suitable error correction and retransmission techniques may be utilized for any data losses that might occur due to the potentially reduced reliability of one or more of the links. This may be acceptable in a number of cases due to less stringent latency requirements for certain types of communication.

As those skilled in the art will readily appreciate, various aspects described throughout this disclosure may be extended to any suitable telecommunication systems, network architectures and communication standards. By way of example, various aspects may be applied to UMTS systems such as W-CDMA, TD-SCDMA, and TD-CDMA. Various aspects may also be applied to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems, including those described by yet-to-be defined wide area network standards. The actual telecommunication standard, network architecture, and/or communication standard employed will depend on the specific application and the overall design constraints imposed on the system.

Within the present disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first die may be coupled to a second die in a package even though the first die is never directly physically in contact with the second die. The terms "circuit" and "circuitry" are used broadly, and intended to include both hardware implementations of electrical devices and conductors that, when connected and configured, enable the performance of the functions described in the present disclosure, without limitation as to the type of electronic circuits, as well as software implementations of information and instructions that, when executed by a processor, enable the performance of the functions described in the present disclosure.

One or more of the components, steps, features and/or functions illustrated in FIGs. 1-10 may be rearranged and/or combined into a single component, step, feature or function or embodied in several components, steps, or functions. Additional elements, components, steps, and/or functions may also be added without departing from novel features disclosed herein. The apparatus, devices, and/or components illustrated in FIGs. 1-10 may be configured to perform one or more of the methods, features, or steps described herein. The novel algorithms described herein may also be efficiently implemented in software and/or embedded in hardware.

In the following further examples are described to facilitate the understanding of the invention.

In one further example, a method of wireless communication is described, the method comprising jointly encoding control information across a plurality of physical links, allocating a portion of the encoded control information to each of the plurality of physical links and transmitting the encoded control information on each of the plurality of physical links. The method may further comprise transmitting data information on each of the plurality of physical links. Also, the method may comprise transmitting the encoded control information substantially simultaneously on each of the plurality of physical links. The plurality of physical links may correspond to two or more radio access technologies. Further, the plurality of physical links may correspond to physical channels in different bands. The plurality of physical links may correspond to a plurality of multiple-input multiple-output (MIMO) configurations.

In yet another further example, a method of wireless communication is described, the method comprising determining one or more characteristics of a plurality of physical links, selecting one or more physical links from among the plurality of physical links in accordance with the determined characteristics and transmitting control information on the selected one or more physical links. The selecting one or more physical links may comprise receiving an indication from a scheduling entity identifying the one or more physical links. The method may further comprise transmitting data information on each of the plurality of physical links. Further, a first physical link of the plurality of physical links may be a link with a first user, and wherein a second physical link of the plurality of physical links may be a link with a second user, wherein the selecting one or more physical links may comprise selecting the first physical link for the first user and selecting the second physical link for the second user and wherein the transmitting control information may comprise transmitting first control information for the first user on the selected first physical link, and transmitting second control information for the second user on the selected second physical link.

In yet another further example, an apparatus configured for wireless communication is described, the apparatus comprising an encoder for encoding control information across a plurality of physical links, a scheduler for allocating a portion of the encoded control information to each of the plurality of physical links and at least one transceiver for transmitting the encoded control information on each of the plurality of physical links. The at least one transceiver may be further configured for transmitting data information on each of the plurality of physical links. Further, the at least one transceiver may be configured for transmitting the encoded control information substantially simultaneously on each of the plurality of physical links. The plurality of physical links may correspond to two or more radio access technologies. Further, the plurality of physical links may correspond to physical channels in different bands. Also, the plurality of physical links may correspond to a plurality of multiple-input multiple-output (MIMO) configurations.

In yet another further example, an apparatus configured for wireless communication is described, the apparatus comprising at least one transceiver for communicating over a plurality of physical links, a computer-readable storage medium and at least one processor communicatively coupled to the at least one transceiver and the computer-readable storage medium, wherein the at least one processor is configured to determine one or more characteristics of the plurality of physical links, select one or more physical links from among the plurality of physical links in accordance with the determined characteristics and transmit control information on the selected one or more physical links utilizing the at least one transceiver. The at least one processor being configured to select one or more physical links, may be further configured to receive an indication from a scheduling entity identifying the one or more physical links. Further, the at least one processor may be configured to transmit data information on each of the plurality of physical links utilizing the at least one transceiver. A first physical link of the plurality of physical links may be a link with a first user, and wherein a second physical link of the plurality of physical links may be a link with a second user, wherein the at least one processor, being configured to select one or more physical links, may be configured to select the first physical link for the first user and to select the second physical link for the second user and wherein the at least one processor, being configured to transmit control information, is may be further configured to transmit first control information for the first user on the selected first physical link, and to transmit second control information for the second user on the selected second physical link.

## Claims

1. A method of wireless communication performed by a scheduling entity (102, 1002), the method comprising:
jointly encoding (702) control information (508) across a plurality of physical links using a convolutional code or turbo code;
allocating (704) a portion of the encoded control information (508) to each of the plurality of physical links;
transmitting data (502) on a data channel using a first transmission time interval, TTI;
puncturing, as indicated by the control information, the data (502) being transmitted using the first transmission time interval, TTI, with other data (504) utilizing a second TTI shorter in duration than the first TTI and overlapping with a portion of the first TTI used for transmitting the data (502), wherein the first TTI is used for latency-tolerant data (502) and the second TTI is used for low latency data (504); and
transmitting (706) the encoded control information (508) on a control channel (506) comprising the plurality of physical links, via multi-link diversity, utilizing the second TTI shorter in duration than the first TTI and overlapping with the portion of the first TTI used for transmitting the data (502).

2. The method of claim 1, further comprising transmitting data information on each of the plurality of physical links.

3. The method of claim 1, further comprising transmitting the encoded control information (508) substantially simultaneously on each of the plurality of physical links.

4. The method of claim 1, wherein the plurality of physical links corresponds to two or more radio access technologies.

5. The method of claim 1, wherein the plurality of physical links corresponds to physical channels in different bands.

6. The method of claim 1, wherein the plurality of physical links corresponds to a plurality of multiple-input multiple-output, MIMO, configurations.

7. A scheduling entity (102, 1002) configured for wireless communication, the scheduling entity (102, 1002) comprising:
means for jointly encoding control information (508) across a plurality of physical links using a convolutional code or turbo code;
means for allocating a portion of the encoded control information (508) to each of the plurality of physical links;
means for transmitting data (502) on a data channel using a first transmission time interval, TTI;
means for puncturing, as indicated by the control information, the data (502) being transmitted using the first transmission time interval, TTI, with other data (504) utilizing a second TTI shorter in duration than the first TTI and overlapping with a portion of the first TTI used for transmitting the data (502), wherein the first TTI is used for latency-tolerant data (502) and the second TTI is used for low latency data (504); and
means for transmitting the encoded control information (508) on a control channel (506) comprising the plurality of physical links, via multi-link diversity, utilizing the second TTI shorter in duration than the first TTI and overlapping with the portion of the first TTI used for transmitting the data (502).

8. The scheduling entity (102, 1002) of claim 7, further comprising means for transmitting data information on each of the plurality of physical links.

9. The scheduling entity (102, 1002) of claim 7, further comprising means for transmitting the encoded control information (508) substantially simultaneously on each of the plurality of physical links.

10. The scheduling entity (102, 1002) of claim 7, wherein the plurality of physical links corresponds to two or more radio access technologies.

11. The scheduling entity (102, 1002) of claim 7, wherein the plurality of physical links corresponds to physical channels in different bands.

12. The scheduling entity (102, 1002) of claim 7, wherein the plurality of physical links corresponds to a plurality of multiple-input multiple-output, MIMO, configurations.

13. A computer program product including a computer-readable medium with instructions stored thereon, which when executed by a computer cause the computer to perform a method according to any of claims 1 to 6.

## Patentansprüche

1. Ein Verfahren zur drahtlosen Kommunikation, das von einer Planungseinheit (102, 1002) durchgeführt wird, das Verfahren aufweisend:
gemeinsames Kodieren (702) von Steuerinformation (508) über eine Vielzahl von physikalischen Verbindungen unter Verwendung eines Faltungscodes oder Turbocodes;
Zuweisen (704) eines Teils der kodierten Steuerinformation (508) zu jeder der mehreren physikalischen Verbindungen;
Übertragen von Daten (502) auf einem Datenkanal unter Verwendung eines ersten Übertragungszeitintervalls, TTI;
Punktieren, wie durch die Steuerinformation angegeben, der Daten (502), die unter Verwendung des ersten Übertragungszeitintervalls TTI übertragen werden, mit anderen Daten (504), die ein zweites TTI verwenden, das kürzer ist als das erste TTI und sich mit einem Teil des ersten TTI überschneidet, der für die Übertragung der Daten (502) verwendet wird, wobei das erste TTI für latenztolerante Daten (502) verwendet wird und das zweite TTI für Daten (504) mit niedriger Latenz verwendet wird; und
Übertragen (706) der kodierten Steuerinformation (508) auf einem Steuerkanal (506), der die Mehrzahl von physikalischen Verbindungen aufweist, über Multi-Link-Diversity, unter Verwendung der zweiten TTI das kürzer ist als das erste TTI und sich mit dem Teil der ersten TTI überschneidet, der zum Übertragen der Daten (502) verwendet wird.

2. Das Verfahren nach Anspruch 1, weiter aufweisend Übertragen von Dateninformation auf jeder der Vielzahl von physikalischen Verbindungen.

3. Das Verfahren nach Anspruch 1, weiter aufweisend Übertragen der kodierten Steuerinformation (508) im Wesentlichen gleichzeitig auf jeder der Vielzahl von physikalischen Verbindungen.

4. Das Verfahren nach Anspruch 1, wobei die Vielzahl der physikalischen Verbindungen zwei oder mehr Funkzugangstechnologien entspricht.

5. Das Verfahren nach Anspruch 1, wobei die Vielzahl der physikalischen Verbindungen physikalischen Kanälen in verschiedenen Bändern entspricht.

6. Das Verfahren nach Anspruch 1, wobei die Vielzahl der physikalischen Verbindungen einer Vielzahl von Multiple-Input Multiple-Output, MIMO, Konfigurationen entspricht.

7. Eine Planungseinheit (102, 1002), die für drahtlose Kommunikation konfiguriert ist, die Planungseinheit (102, 1002) aufweisend:
Mittel zum gemeinsamen Codieren von Steuerinformation (508) über eine Vielzahl von physikalischen Verbindungen unter Verwendung eines Faltungscodes oder Turbocodes;
Mittel zum Zuweisen eines Teils der kodierten Steuerinformation (508) an jede der Vielzahl von physikalischen Verbindungen;
Mittel zum Übertragen von Daten (502) auf einem Datenkanal unter Verwendung eines ersten Übertragungszeitintervalls, TTI;
Mittel zum Punktieren, wie durch die Steuerinformation angegeben, der Daten (502), die unter Verwendung des ersten Übertragungszeitintervalls TTI übertragen werden, mit anderen Daten (504), die ein zweites TTI verwenden, das kürzer ist als das erste TTI und sich mit einem Teil des ersten TTI überschneidet, der zum Übertragen der Daten (502) verwendet wird, wobei das erste TTI für latenztolerante Daten (502) verwendet wird und das zweite TTI für Daten mit niedriger Latenz (504) verwendet wird; und
Mittel zum Übertragen der kodierten Steuerinformation (508) auf einem Steuerkanal (506), der die Vielzahl von physikalischen Verbindungen aufweist, über Multi-Link-Diversity, unter Verwendung der zweiten TTI das kürzer ist als das erste TTI und sich mit dem Teil der ersten TTI überschneidet, der zum Übertragen der Daten (502) verwendet wird.

8. Die Planungseinheit (102, 1002) nach Anspruch 7, weiter aufweisend Mittel zum Übertragen von Dateninformation auf jeder der Vielzahl von physikalischen Verbindungen.

9. Die Planungseinheit (102, 1002) nach Anspruch 7, weiter aufweisend Mittel zum Übertragen der kodierten Steuerinformation (508) im Wesentlichen gleichzeitig auf jeder der Vielzahl von physikalischen Verbindungen.

10. Die Planungseinheit (102, 1002) nach Anspruch 7, wobei die Vielzahl der physikalischen Verbindungen zwei oder mehr Funkzugangstechnologien entspricht.

11. Die Planungseinheit (102, 1002) nach Anspruch 7, wobei die Vielzahl der physikalischen Verbindungen physikalischen Kanälen in verschiedenen Bändern entspricht.

12. Die Planungseinheit (102, 1002) nach Anspruch 7, wobei die Vielzahl der physikalischen Verbindungen einer Vielzahl von Multiple-Input Multiple-Output, MIMO, Konfigurationen entspricht.

13. Ein Computerprogrammprodukt, das ein computerlesbares Medium mit darauf gespeicherten Anweisungen enthält, die, wenn sie von einem Computer ausgeführt werden, den Computer veranlassen, ein Verfahren nach einem der Ansprüche 1 bis 6 durchzuführen.

## Revendications

1. Un procédé de communication sans fil réalisé par une entité de planification (102, 1002), le procédé comprenant :
le codage conjoint (702) d'informations de contrôle (508) sur une pluralité de liaisons physiques en utilisant un code de convolution ou un turbo code ;
l'attribution (704) à chacune de la pluralité de liaisons physiques d'une partie des informations de contrôle codées (508) ;
la transmission de données (502) sur un canal de données en utilisant un premier intervalle de temps de transmission, TTI ;
la perforation, comme indiqué par les informations de contrôle, des données (502) qui sont transmises en utilisant le premier intervalle de temps de transmission, TTI, avec d'autres données (504) en utilisant un deuxième TTI de durée plus courte que le premier TTI et chevauchant la partie du premier TTI utilisée pour la transmission des données (502), dans lequel le premier TTI est utilisé pour des données tolérantes à la latence (502) et le deuxième TTI est utilisé pour des données à faible latence (504) ; et
la transmission (706) des informations de contrôle codées (508) sur un canal de contrôle (506) comprenant la pluralité de liaisons physiques, via une diversité de liaisons multiples, en utilisant le deuxième TTI de durée plus courte que le premier TTI et chevauchant la partie du premier TTI utilisée pour la transmission des données (502).

2. Le procédé selon la revendication 1, comprenant en outre la transmission d'informations de données sur chacune de la pluralité de liaisons physiques.

3. Le procédé selon la revendication 1, comprenant en outre la transmission des informations de contrôle codées (508) sensiblement simultanément sur chacune de la pluralité de liaisons physiques.

4. Le procédé selon la revendication 1, dans lequel la pluralité de liaisons physiques correspond à deux ou plus technologies d'accès radio.

5. Le procédé selon la revendication 1, dans lequel la pluralité de liaisons physiques correspond à des canaux physiques dans des bandes différentes.

6. Le procédé selon la revendication 1, dans lequel la pluralité de liaisons physiques correspond à une pluralité de configurations d'entrées multiples et sorties multiples, MIMO.

7. Une entité de planification (102, 1002) configurée pour la communication sans fil, l'entité de planification (102, 1002) comprenant :
un moyen pour coder conjointement des informations de contrôle (508) sur une pluralité de liaisons physiques en utilisant un code de convolution ou un turbo code ;
un moyen pour attribuer à chacune de la pluralité de liaisons physiques une partie des informations de contrôle codées (508) ;
un moyen pour transmettre des données (502) sur un canal de données en utilisant un premier intervalle de temps de transmission, TTI ;
un moyen pour perforer, comme indiqué par les informations de contrôle, les données (502) qui sont transmises en utilisant le premier intervalle de temps de transmission, TTI, avec d'autres données (504) en utilisant un deuxième TTI de durée plus courte que le premier TTI et chevauchant la partie du premier TTI utilisée pour la transmission des données (502), dans lequel le premier TTI est utilisé pour des données tolérantes à la latence (502) et le deuxième TTI est utilisé pour des données à faible latence (504), et
un moyen pour transmettre les informations de contrôle codées (508) sur un canal de contrôle (506) comprenant la pluralité de liaisons physiques, via une diversité de liaisons multiples, en utilisant le deuxième TTI de durée plus courte que le premier TTI et chevauchant la partie du premier TTI utilisé pour la transmission des données (502).

8. L'entité de planification (102, 1002) selon la revendication 7, comprenant en outre un moyen pour transmettre des informations de données sur chacune de la pluralité de liaisons physiques.

9. L'entité de planification (102, 1002) selon la revendication 7, comprenant en outre un moyen pour transmettre les informations de contrôle codées (508) sensiblement simultanément sur chacune de la pluralité de liaisons physiques.

10. L'entité de planification (102, 1002) selon la revendication 7, dans lequel la pluralité de liaisons physiques correspond à deux ou plus technologies d'accès radio.

11. L'entité de planification (102, 1002) selon la revendication 7, dans lequel la pluralité de liaisons physiques correspond à des canaux physiques dans des bandes différentes.

12. L'entité de planification (102, 1002) selon la revendication 7, dans lequel la pluralité de liaisons physiques correspond à une pluralité de configurations d'entrées multiples et sorties multiples, MIMO.

13. Un produit de programme de calculateur comportant un support lisible par calculateur avec des instructions stockées dessus qui, quand elles sont exécutées par un calculateur, amènent le calculateur à réaliser un procédé selon une des revendications 1 à 6.
